# EUROPÄISCHE PATENTSCHRIFT

(11) **EP 3 140 664 B1**
(45) Veröffentlichungstag und Bekanntmachung des Hinweises auf die Patenterteilung: **05.05.2021**
(21) Anmeldenummer: 15712280.5
(22) Anmeldetag: 13.03.2015
(51) Int. Cl.: G01P 3/488, G01D 5/245, B60B 27/00, B60T 8/32

(54) **SENSORRING**
SENSOR RING
BAGUE DE CAPTEUR

(30) Priorität: 07.05.2014 DE 102014208510
(43) Veröffentlichungstag der Anmeldung: 15.03.2017
(73) Patentinhaber: Bayerische Motoren Werke Aktiengesellschaft, 80809 München (DE)
(72) Erfinder: KIRCHBERGER, Andreas, 85778 Haimhausen (DE); SEIDL, Josef, 84130 Dingolfing (DE)
(86) Internationale Anmeldenummer: PCT/EP2015/055300
(87) Internationale Veröffentlichungsnummer: WO 2015/169489

(56) Entgegenhaltungen:
- EP-A1- 0 213 732
- WO-A1-2013/157999
- DE-A1- 4 230 043
- DE-A1-102006 031 718
- DE-A1-102006 049 999
- US-A- 5 407 213
- US-A1- 2002 140 418
- US-A1- 2003 122 539

## Beschreibung

Die Erfindung betrifft einen Sensorring mit den Merkmalen von Anspruch 1. Die vorliegende Erfindung betrifft demnach einen Sensorring, der durch einen mehrlagigen Aufbau charakterisiert ist, bei dem die äußeren Lagen jeweils durch eine Folie aus einem nicht-ferromagnetischen Material, vorzugsweise aus einem Kunststoff gebildet sind.

Der erfindungsgemäße Sensorring wird beispielsweise zur Geschwindigkeitsmessung eines Rades verwendet. Im Stand der Technik sind zum Beispiel Zahnräder für einen magnetischen Geschwindigkeitsmeßwertgeber bekannt.

Aus dem Dokument EP-A-213 732 kennt man einen Zahnkranz, wie er aus dem Stand der Technik bekannt ist. Sobald ein Fahrzeugrad eines PKW, eines Motorrades oder eines anderen Fahrzeuges mit einem beim Bremsen wirkenden Antiblockierungssystem (ABS-System) ausgerüstet ist, ist es wünschenswert, die Drehgeschwindigkeit des Rades zu ermitteln.

Hierzu verwendet man üblicherweise magnetische Meßwertgeber, die an der betroffenen Radhalterung angeordnet sind. Solche Meßwertgeber ermitteln die notwendigen Informationen aus dem magnetischen Feld, wobei sich das magnetische Feld mit der Vorbeilauffrequenz der Zähne des Zahnrades eines mit dem Rad des Fahrzeuges ändert.

In der Praxis haben sich jedoch diverse Nachteile solcher gattungsgemäßer Zahnräder gezeigt. Aufgrund der Position der Räder in den Radkästen oder im Bereich von Kotflügeln des Fahrzeuges können die Zahnkränze durch Fremdkörper, Steine oder dergleichen beschädigt werden. Ferner können sich Schmutz, Teile auf der Fahrbahn oder Fremdkörper in dem Zahnkranz verhaken und so seine Funktion beeinträchtigen.

Sobald die Meßwertgeber beschädigt sind, kann es sogar zum vollständigen Versagen des Antiblockierungssicherungssystems kommen.

So ist aus der EP 0594452 B1 ein Lösung für ein Zahnrad für einen Radgeschwindigkeitssensor bekannt, welches einen vervollkommneten Zahnkranz vorzuschlägt, um die zuvor beschriebene Gefahr einer Beschädigung der magnetischen Meßwertgeber und eines Ausfalles der beim Bremsen wirkenden Radantiblockierungssysteme zu vermeiden.

Zu diesem Zweck wird in der EP 0594452 B1 vorgeschlagen, dass die äußere Umfangsverzahnung des Zahnkranzes und zwar die Lücken zwischen den Zähnen des Kranzes mit Elementen aus nicht magnetischem Kunststoff ausgefüllt werden, wobei ein Ring vorgesehen ist, der eine zylindrische Umfangsfläche bildet und in einem Absatz des besagten Kranzes untergebracht ist.

Nachteilig sind dabei die aufwändige Fertigung und die notwendige Exaktheit der Lage- und Formtoleranzen. Der Ring muß in einem gesonderten Werkzeug kostenintensiv gefertigt werden und in einem weiteren Arbeitsschritt mit dem Zahnkranz verbunden werden. Ferner ist der mechanische Zusammenhalt im Dauerbetrieb nicht ohne Weiteres gewährleistet.

Weiterer Sensorringe betreffender relevanter Stand der Technik ist zudem aus den Schriften DE 10 2006 04999 A1, WO 2013/157999 A1 und DE 42 30 043 A1 bekannt.

US-A- 2002/140418 offenbart einen Sensorring aus magnetischem Material, dessen Flächen durch nichtmagnetische Abdeckungen geschützt sind, wobei eine der Abdeckungen auch die Außenkante überdeckt und bis auf die andere Seite übergreift.

Der Erfindung liegt deshalb die Aufgabe zugrunde, vorbesagte Nachteile zu überwinden und eine verbesserte Lösung für einen Sensorring bereitzustellen, der insbesondere gute mechanische Festigkeit aufweist, einfach und kostengünstig herzustellen ist und wenig schmutz- und beschädigungsanfällig ist.

Diese Aufgabe wird durch einen Sensorring mit den Merkmalen von Anspruch 1 gelöst.

Grundgedanke der vorliegenden Erfindung ist es einen dreilagigen Sensorring aus Funktionselementen bereitzustellen, bei dem das eine Funktionselement aus einem ferromagnetischen Material mit Öffnungen im Funktionselement gebildet wurde und dieses Funktionselement mit zwei in Form einer Folie aufgebrachten nicht-ferromagnetischen Funktionselementen formschlüssig oder kraftschlüssig verbunden und/oder umgeben wurde. Der Sensorring besteht erfindungsgemäß aus einem zentralen Funktionselement aus einem ferromagnetischen Material zusammen mit zwei das zentrale Funktionselement "sandwich-artig" umgebenden nichtferromagnetischen Funktionselementen.

Erfindungsgemäß wird daher ein Sensorring für einen magnetischen Messwertgeber eines ABS-Systems mit den Merkmalen des Anspruchs 1 vorgeschlagen. In einer bevorzugten Ausbildung der Erfindung sind die den Sensorring ausbildenden Ringscheibenelemente formschlüssig und/oder kraftschlüssig mittels eines Verbindungsverfahrens fest miteinander verbunden. Hierdurch wird eine hohe Standfestigkeit für den betriebsüblichen Gebrauch erzielt.

Besonders vorteilhaft ist es daher die Ringscheibenelemente mittels Kleben miteinander zu verbinden. Erfindungsgemäß sind die nicht-ferromagnetischen Ringscheibenelemente aus einer Folie gebildet und mit Vorteil auf den Seitenflächen des ferromagnetischen Ringelementes aufgebracht.

Ferner ist erfindungsgemäß ein nicht-ferromagnetisches Ringscheibenelement um die Außenkante des ferromagnetischen Ringscheibenelements herumgeformt oder umgreift die Außenkante bis auf die gegenüberliegende Seite. Dies kann nach einem nicht erfindungsgemäßen Beispiel bei einem nicht-ferromagnetischem verformbaren Material durch umbördeln, um die Kante herum erfolgen.

Es ist weiter vorteilhaft, wenn die Außenkante des ferromagnetischen Ringscheibenelements umgekröpft oder umgebogen wurde, so dass einerseits die Stabilität des Sensorringes erhöht wird und andererseits eine Funktionskante gebildet wird.

In einer alternativen Ausführungsform der Erfindung kann das Material des oder der Ringscheibenelement(e) auch aus nicht-ferromagnetischem Metall, vorzugsweise aus Aluminium gebildet werden.

Weiter Vorteilhaft ist eine Ausführung bei der die Öffnungen des ferromagnetischen Ringscheibenelements mit einem nicht-ferromagnetischem Material formschlüssig ausgespritzt wurden und so ein formschlüssiger Verbund aus beiden Materialien gebildet wird.

Erfindungsgemäß weist das Ringscheibenelement eine im Wesentlichen runde Zentralöffnung zur Montage auf einer Radnabe auf und erstrecken sich mehrere Montageelemente (z.B. Montagelappen mit Bohrungen) vom Rand des Ringscheibenelements nach innen in den Bereich der Zentralöffnung, wobei die Seitenflächen der Montagelappen nicht von einem nicht-ferromagnetischen Ringscheibenelement bedeckt sind.

In einer möglichen Ausführungsform könnten die besagten Öffnungen im Ringscheibenelement einseitig bis zum Rand reichen, was jedoch mit einer partiellen Schwächung der Stabilität einhergeht. Es ist daher vorteilhaft, wenn die eingebrachten Öffnungen innerhalb des Ringscheibenelements äquidistant angeordnet so sind, dass jeweils ein innerer und äußerer Ringabschnitt die Öffnungen radial einfassen bzw. begrenzen.

Weitere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Aufsicht auf ein ferromagnetisches Ringscheibenelement eines Sensorrings gemäß einer beispielhaften Ausführung der Erfindung;
- Fig.2: eine Seitenansicht auf einen dreilagigen Sensorring,
- Fig. 3: eine schematische Teil-Schnittansicht durch einen Sensorring,
- Fig. 4: eine schematische Teil-Schnittansicht durch einen Sensorring,
- Fig. 5: eine schematische Teil-Schnittansicht durch einen Sensorring,
- Fig. 6: eine schematische Teil-Schnittansicht durch einen Sensorring,
- Fig. 7: eine schematische Schnittansicht durch ein Herstellungswerkzeug zum Herstellen eines Sensorring mittels Ausgießen; und
- Fig. 8: eine schematische Schnittansicht durch ein Herstellungswerkzeug zum Herstellen eines Sensorring mittels Umspritzen.

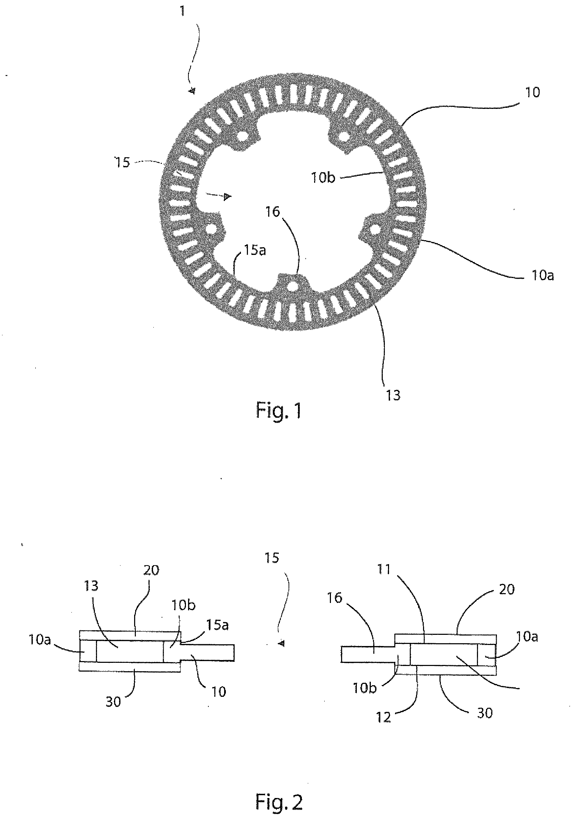

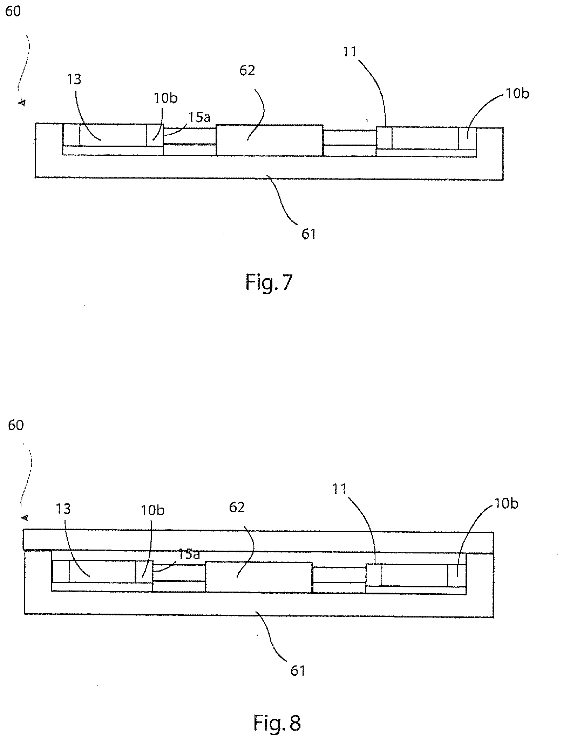

In der Figur 1 ist eine Aufsicht auf ein ferromagnetisches Ringscheibenelement 10 eines Sensorrings 1 gemäß einer beispielhaften Ausführung der Erfindung dargestellt. Die Figuren 2 bis 6 zeigen jeweils nicht erfindungsgemäße Varianten des Sensorrings und die Figuren 7 und 8 ein Herstellungswerkzeug zur Herstellung einer nicht erfindungsgemäßen Variante des Sensorrings.

In der Figur 2 ist eine seitliche Schnittansicht auf einen dreilagigen Sensorring bestehend aus drei Ringscheibenelementen 10, 20, 30 gezeigt. Das Ringscheibenelement 10 des Sensorrings 1 weist eine im Wesentlichen runde

Zentralöffnung 15 zur Montage auf einer Radnabe auf. Ferner besitzt es einen inneren und äußeren Ringabschnitt 10a, 10b, die umfangsgeschlossen d.h. als vollständiger um 360° geschlossener Ring ausgebildet sind. Vom Innenrand 15a erstrecken sich mehrere Montagelappen 16 vom Ringscheibenelement 10 weg in den Bereich der Zentralöffnung 15 hinein. Der Sensorring 1 weist im Bereich des Ringscheibenelements 10 eine Vielzahl äquidistant eingebrachten Öffnungen 13 auf, die sich als Langlöcher in Radialrichtung erstrecken. Diese als Langlöcher ausgebildete Öffnungen 13 des Ringscheibenelements 10 sind so angeordnet, dass der innerer und äußerer Ringabschnitt 10a, 10b die Öffnungen 13 jeweils radial begrenzen.

In Figur 2 weist der Sensorring 1 ferner zwei ringförmig angeordneten Funktionselemente 20, 30 auf, wobei die ein Funktionselement auf der Oberseite 11 und das andere auf der Unterseite 12 des ferromagnetischen Ringscheibenelements 10 aufgebracht sind. Die drei Ringscheibenelemente 10, 20, 30 sind mittels eines Verbindungsverfahrens fest miteinander verbunden sind. Im vorliegenden Ausführungsbeispiel sind diese miteinander verklebt.

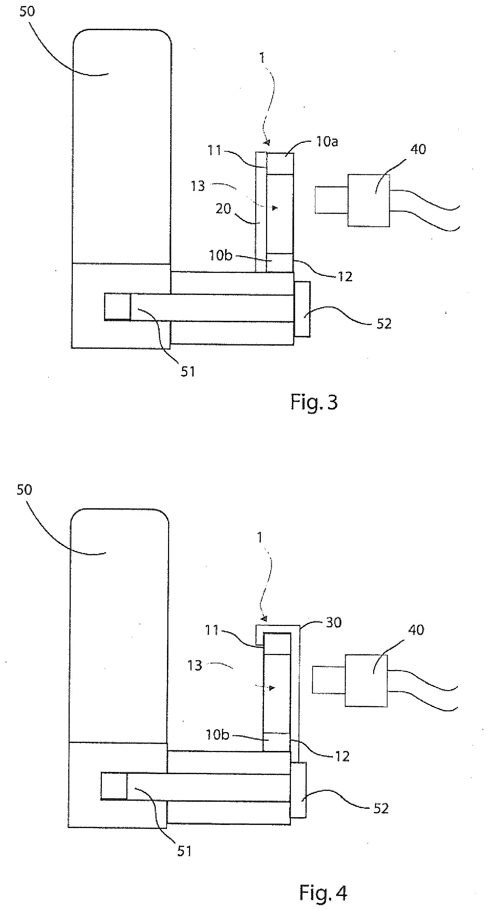

Die Montagelappen 16 sind auf beiden Seitenflächen frei und werden nicht von einem nicht-ferromagnetischen Ringscheibenelement 20, 30 bedeckt. Die Ringscheibenelemente 20, 30 bedecken gemäß den nicht erfindungsgemäßen Ausführungen in den Figuren 3 bis 6 jeweils eine Oberseite und/ oder eine Unterseite des ferromagnetischen Ringscheibenelements 10.

Wie in den Figuren 3 bis 7 weiter ersichtlich, wird der Sensorring 1 zusammen mit einem magnetischen Messwertgeber 40 eines ABS-Systems verwendet, der seitlich im Bereich neben den Öffnungen in einem definierten Abstand montiert ist, um die Drehgeschwindigkeit des Rades 50 zu ermitteln. Der Sensorring 1 ist daher an der Radnabe 51 mittels Schrauben 52 befestigt.

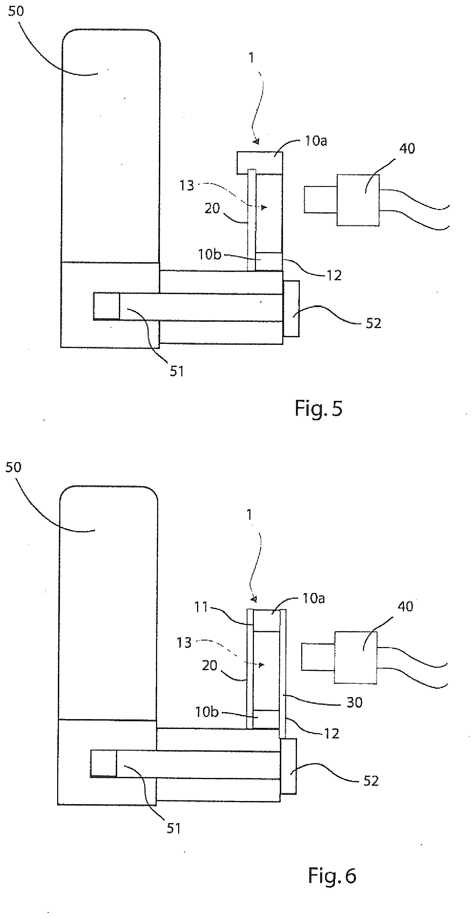

In den Figuren 3 bis 7 sind alternative Ausführungen des Sensorrings 1 gezeigt. In Figur 3 ist einseitig eine Kunststoffabdeckung 20 am ferromagnetischen Ringscheibenelement 10 befestigt und deckt die dem Rad zugewandte Seite d.h. Oberseite 11 ab. In der Figur 4 ist das als Kunststoffabdeckung 30 ausgebildete Ringscheibenelement 30 um die Außenkante 14 des Ringscheibenelements 10 herumgeformt und reicht über die Außenkante 14 bis auf die gegenüberliegende Seite 11 herum. In der Figur 5 findet sich eine Ausführung bei der die Abdeckung 20 gebördelt ist.

In der Figur 6 ist eine Ausführungsvariante des Sensorrings 1 mit drei Ringscheibenelement 10, 20, 30 gezeigt (ähnlich Figur 2). In dieser Ausführung wurden die Ringscheibenelemente 20, 30 als Folie beidseitig auf die Seiten 11, 12 aufgebracht.

In den Figuren 7 und 8 ist jeweils eine schematische Schnittansicht durch ein Herstellungswerkzeug 60 zum Herstellen eines Sensorrings mittels Ausgießen (Figur 7) bzw. mittels Umspritzen (Figur 8) gezeigt. Es sind diverse Ausführungsvarianten der Werkzeuge 60 denkbar, um einen wie zuvor beschriebenen Sensorring 1 herzustellen.

Die Herstellungswerkzeuge 60 umfassen eine Form 61 in die das ferromagnetische Ringscheibenelement 10 eingelegt wird. Je nach Position, Formelementen 61 und der Kavitätenform als solcher wird das Ringscheibenelement so ausgegossen bzw. umspritzt, dass die Öffnungen 13 bestimmungsgemäß gefüllt werden und ggf. ein oder zwei seitliche Abdeckungen mit ausgebildet oder angespritzt werden. Auf diese Weise können nicht nur die Öffnungen 13 gefüllt werden, sondern können z.B. gleichzeitig in einem Fertigungsschritt die Seiten 11, 12 mit Formstoff überdeckt werden, um so einen Sensorring 1 zu erhalten.

Die Erfindung beschränkt sich in ihrer Ausführung nicht auf die vorstehend angegebenen bevorzugten Ausführungsbeispiele. Vielmehr ist eine Anzahl von Varianten und Kombinationen denkbar, welche von der dargestellten Lösung auch bei grundsätzlich anders gearteten Ausführungen Gebrauch machen, sofern diese die Merkmale der in den Ansprüchen definierten Erfindung aufweisen.

## Patentansprüche

1. Sensorring (1) für einen magnetischen Messwertgeber (40) eines ABS-Systems bestehend aus wenigstens drei ringförmig angeordneten Funktionselementen (10, 20, 30), wobei das erste Funktionselement als ein ferromagnetisches Ringscheibenelement (10) mit einer flachen Oberseite (11) und einer flachen Unterseite (12) mit einer Vielzahl von Öffnungen (13) ausgebildet ist und wobei die zweiten Funktionselemente (20, 30) als nicht-ferromagnetische Ringscheibenelemente auf der Oberseite (11) und der Unterseite (12) des ferromagnetischen Ringscheibenelements (10) aufgebracht sind, wobei
eines der nicht-ferromagnetischen Ringscheibenelemente (20, 30) um eine Außenkante (14) des ferromagnetischen Ringscheibenelements (10) herumgeformt ist oder die Außenkante (14) bis auf die gegenüberliegende Seite (11, 12) umgreift,
die nicht-ferromagnetischen Ringscheibenelemente (20, 30) aus einer Folie gebildet sind und
das ferromagnetische Ringscheibenelement (10) eine runde Zentralöffnung (15) zur Montage auf einer Radnabe aufweist, in welche sich mehrere Montagelappen (16) mit Bohrungen als Montageelemente vom Rand des ersten Funktionselements (10) hinein erstrecken, und wobei
die Montagelappen (16) nicht von den nicht-ferromagnetischen Ringscheibenelementen (20, 30) bedeckt sind.

2. Sensorring (1) gemäß Anspruch 1, **dadurch gekennzeichnet, dass** die Ringscheibenelemente (10, 20, 30) formschlüssig und/oder kraftschlüssig mittels eines Verbindungsverfahrens fest miteinander verbunden sind.

3. Sensorring (1) gemäß Anspruch 1 oder 2, **dadurch gekennzeichnet, dass** die Ringscheibenelemente (10, 20, 30) mittels Kleben formschlüssig und/oder kraftschlüssig miteinander verbunden sind.

4. Sensorring (1) gemäß einem der vorhergehenden Ansprüchen, **dadurch gekennzeichnet, dass** das Material der nicht-ferromagnetischen Ringscheibenelement(e) (20, 30) aus Kunststoff besteht.

5. Sensorring (1) gemäß einem der vorhergehenden Ansprüchen, **dadurch gekennzeichnet, dass** das Material der nicht-ferromagnetischen Ringscheibenelement(e) (20, 30) aus nicht-ferromagnetischem Metall, vorzugsweise aus Aluminium gebildet ist.

6. Sensorring (1) gemäß einem der vorhergehenden Ansprüchen, **dadurch gekennzeichnet, dass** das ferromagnetische Ringscheibenelement (10) in den Öffnungen (13) mit einem nicht-ferromagnetischem Material formschlüssig ausgespritzt wurde.

7. Sensorring (1) gemäß einem der vorhergehenden Ansprüchen, **dadurch gekennzeichnet, dass** die vorzugsweise äquidistant eingebrachten Öffnungen (13) im ferromagnetischen Ringscheibenelement (10), so angeordnet sind, dass ein innerer und äußerer Ringabschnitt (10a, 10b) die Öffnungen (13) radial begrenzen.

## Claims

1. Sensor ring (1) for a magnetic measured value encoder (40) of an ABS system composed of at least three function elements (10, 20, 30) which are arranged in the shape of a ring, wherein the first function element is embodied as a ferromagnetic annular disc element (10) with a flat upper side (11) and a flat underside (12) with a multiplicity of openings (13), and wherein the second function elements (20, 30) are applied as non-ferromagnetic annular disc elements to the upper side (11) and the underside (12) of the ferromagnetic annular disc element (10), where
one of the non-ferromagnetic annular disc elements (20, 30) is formed around an outer edge (14) of the ferromagnetic annular disc element (10) or engages around the outer edge (14) as far as the opposite side (11, 12),
the non-ferromagnetic annular disc elements (20, 30) are formed from a film, and
the ferromagnetic annular disc element (10) has a round central opening (15) for mounting on a wheel hub in which a plurality of mounting tabs (16) with drilled holes extend inward as mounting elements from the edge of the first function element (10), and wherein
the mounting tabs (16) are not covered by the non-ferromagnetic annular disc elements (20, 30).

2. Sensor ring (1) according to Claim 1, **characterized in that** the annular disc elements (10, 20, 30) are fixedly connected to one another in a positively engaging and/or frictionally engaging fashion by means of a connecting method.

3. Sensor ring (1) according to Claim 1 or 2, **characterized in that** the annular disc elements (10, 20, 30) are connected to one another in a positively engaging and/or frictionally engaging fashion by bonding.

4. Sensor ring (1) according to one of the preceding claims, **characterized in that** the material of the non-ferromagnetic annular disc element or elements (20, 30) is composed of plastic.

5. Sensor ring (1) according to one of the preceding claims, **characterized in that** the material of the non-ferromagnetic annular disc element or elements (20, 30) is formed from non-ferromagnetic metal, preferably from aluminium.

6. Sensor ring (1) according to one of the preceding claims, **characterized in that** the ferromagnetic annular disc element (10) has been formed by injection moulding in a positively locking fashion in the openings (13) with a non-ferromagnetic material.

7. Sensor ring (1) according to one of the preceding claims, **characterized in that** the openings (13) which are preferably formed equidistantly in the ferromagnetic annular disc element (10) are arranged in such a way that an inner and an outer annular section (10a, 10b) bound the openings (13) radially.

## Revendications

1. Bague de capteur (1) destinée à un transducteur magnétique (40) d'un système ABS comprenant au moins trois éléments fonctionnels (10, 20, 30) disposés en anneau, le premier élément fonctionnel étant conçu comme un élément discoïdal annulaire ferromagnétique (10) comportant une face supérieure plate (11) et une face inférieure plate (12) pourvues d'une multitude d'ouvertures (13) et les deuxièmes éléments fonctionnels (20, 30) étant montés en tant qu'éléments discoïdaux annulaires non ferromagnétiques sur la face supérieure (11) et la face inférieure (12) de l'élément discoïdal annulaire ferromagnétique (10),
l'un des éléments discoïdaux annulaires non ferromagnétiques (20, 30) étant formé autour d'un bord extérieur (14) de l'élément discoïdal annulaire ferromagnétique (10) ou enveloppant le bord extérieur (14) jusqu'à la face opposée (11, 12),
les éléments discoïdaux annulaires non ferromagnétiques (20, 30) étant formés à partir d'un film et
l'élément discoïdal annulaire ferromagnétique (10) comportant une ouverture centrale ronde (15) destinée au montage sur un moyeu de roue dans lequel plusieurs pattes de montage (16) pourvues d'alésages comme éléments de montage s'étendent depuis le bord du premier élément fonctionnel (10), et
les pattes de montage (16) n'étant pas recouvertes par les éléments discoïdaux annulaires non ferromagnétiques (20, 30).

2. Bague de capteur (1) selon la revendication 1, **caractérisée en ce que** les éléments discoïdaux annulaires (10, 20, 30) sont reliés entre eux par complémentarité de formes et/ou en force au moyen d'un procédé de liaison.

3. Bague de capteur (1) selon la revendication 1 ou 2, **caractérisée en ce que** les éléments discoïdaux annulaires (10, 20, 30) sont reliés entre eux par complémentarité de formes et/ou en force par collage.

4. Bague de capteur (1) selon l'une des revendications précédentes, **caractérisée en ce que** la matière de l'élément ou des éléments discoïdaux annulaires non ferromagnétiques (20, 30) comprend de la matière synthétique.

5. Bague de capteur (1) selon l'une des revendications précédentes, **caractérisée en ce que** la matière de l'élément ou des éléments discoïdaux annulaires non ferromagnétiques (20, 30) est formée de métal non ferromagnétique, de préférence d'aluminium.

6. Bague de capteur (1) selon l'une des revendications précédentes, **caractérisée en ce que** l'élément discoïdal annulaire ferromagnétique (10) a été injecté par complémentarité de formes dans les ouvertures (13) avec une matière non ferromagnétique.

7. Bague de capteur (1) selon l'une des revendications précédentes, **caractérisée en ce que** les ouvertures (13), qui sont ménagées de préférence de manière équidistante, sont disposées dans l'élément discoïdal annulaire ferromagnétique (10) de manière que des portions annulaires intérieures et extérieures (10a, 10b) délimitent les ouvertures (13) radialement.
